# EUROPEAN PATENT APPLICATION

(11) **EP 2 160 068 A1**
(43) Date of publication of application: **03.03.2010**
(21) Application number: 08168169.4
(22) Date of filing: 10.03.2006
(51) Int. Cl.: H04W 84/18, H04L 12/56

(54) **Mesh network configured to autonomously commission a network and manage the network topology**

(62) Divisional of application: 06737812.5
(71) Applicant: INTERDIGITAL TECHNOLOGY CORPORATION, Wilmington, Delaware 19810 (US)
(72) Inventor: Olvera-Hernandez, Ulises, Kirkland Québec H9J 4A5 (CA)
(74) Representative: Bergholtz Arkelius, Per Christian

(57) **Abstract**

In a wireless communication system, a method for commissioning and managing communication between a plurality of mesh points (MPs) comprises a first MP broadcasting a signal to a second MP to establish communication with the second MP. The second MP transmits a response signal to the first MP. The first MP authenticates the second MP and determines a master MP, and the first MP establishes the communication with the second MP.

## Description

FIELD OF INVENTION

The present invention is related to a wireless communication system. More particularly, the present invention is related to a mesh network configured to autonomously commission a network and manage the topology of the network.

BACKGROUND

A wireless local area network (WLAN) mesh is generally an IEEE 802.11-based wireless distribution system (WDS) that is part of a distribution system (DS) comprising a set of two or more mesh points interconnected typically via IEEE 802.11 links and communicating via the WLAN mesh services. A WLAN mesh may support an entry point, alternatively known as a mesh portal, automatic topology learning and dynamic path selection.

One type of WLAN is an ad hoc network, typically comprising only stations (STAs) that are within a mutual communication range of each other via a wireless medium (WM). An ad hoc network is typically created in a spontaneous manner. A principal distinguishing characteristic of an ad hoc network is its limited temporal and spatial extent. These limitations allow creating and dissolving the ad hoc network to be sufficiently straightforward and convenient to users of the network facilities with no specialized technical skills.

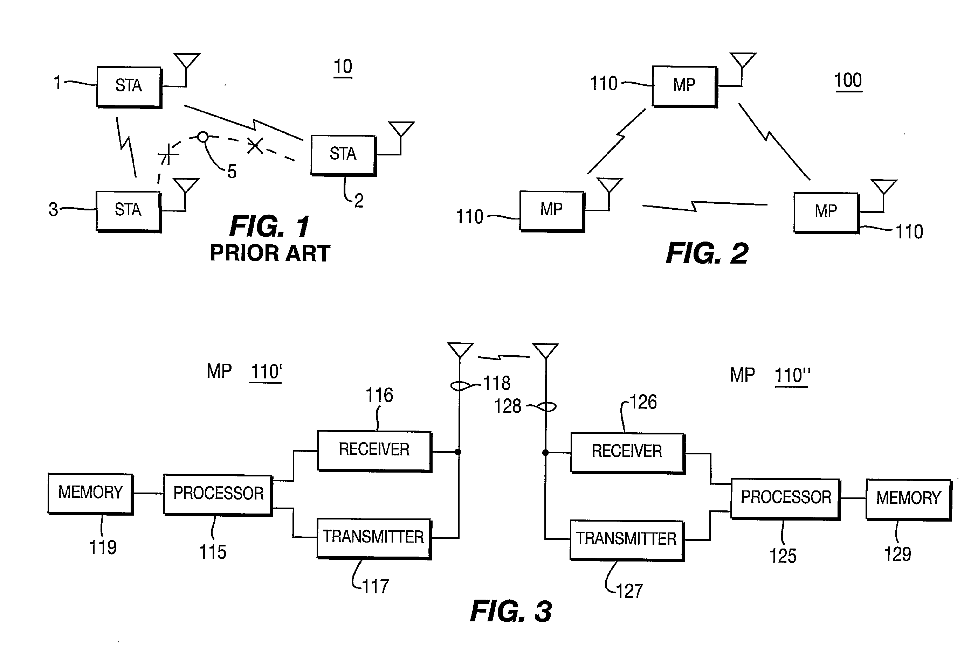

An ad hoc network also often includes an independent basic service set (IBSS), since an IBSS comprises a set of STAs that can communicate directly with each other. Again, this type of IEEE 802.11 LAN is typically formed without pre-planning, and for only as long as the LAN is needed. A significant drawback of the ad hoc network, however, is that although STAs belonging to the network can communicate with each other, they cannot forward or re-route packets to other STAs within the same network. Therefore, a new and direct connection must be established in order to send packets to a different STA if the sending STA is not connected to the destination STA. Figure 1 shows such a prior art wireless communication system 10. The prior art wireless communication system 10 includes a plurality of STAs 1, 2, and 3. STA 1 is in wireless communication with STA 2 and STA 3. STAs 2 and 3 can communicate with STA 1, but are unable to forward packets to one another through STA 1, as indicated by the crossed-out dashed line.

Mesh networks, which are formed from both members and mesh points, attempt to remedy the problem of ad hoc networks by including routing and forwarding capabilities between the members or mesh points of the network. This effectively permits communication between members of the network by using other members. This capability, however, must comply with other functions and security requirements without jeopardizing network performance.

Currently there are limited solutions that implement mesh functionality. These solutions face many challenging problems including capacity and range enhancement, privacy and security, self-stabilizing and multi-path multi-hop routing, self configuration, and fair bandwidth distribution, among other limitations.

These existing mesh networks rely on a network management system operating on centralized facilities for monitoring and managing network operations in order to mitigate some of these problems. Accordingly, current mesh network deployment requires elaborate management procedures for configuration of network topology, including discovery and visualization of wireless access points, mesh portals and fault management. The dynamic nature of these networks makes it difficult and impractical to pursue such an endeavor, since network management-based solutions are slow and require complex manual intervention from the operator.

Real time demanding applications, such as dynamic routing or dynamic frequency selection, cannot rely on topology information that might be outdated. High mobility applications, such as a military battle field scenario, require fast reacting topology management, as mesh members leave and join the network rather rapidly. As the network grows, new requirements are imposed upon the network demanding even quicker redeployment of mesh points based on characteristics of the changing environment. An example of this may be where a mesh point might need to be relocated in order to support increased traffic demands on specific routes.

It would therefore be beneficial if a method and system existed that is not restricted by the limitations of the prior art.

SUMMARY OF THE INVENTION

In a wireless communication system, a method for commissioning and managing communication between a plurality of mesh points (MPs) comprises a first MP broadcasting a signal to a second MP to establish communication with the second MP. The second MP transmits a response signal to the first MP. The first MP authenticates the second MP and determines a master MP, and the first MP establishes the communication with the second MP.

BRIEF DESCRIPTION OF THE DRAWINGS

The foregoing summary, as well as the following detailed description of the preferred embodiments of the present invention will be better understood when read with reference to the appended drawings, wherein:

Figure 1 shows a prior art wireless communication system;

Figure 2 shows a wireless communication system configured in accordance with the present invention;

Figure 3 shows a block diagram of a pair of mesh points (MPs) configured to autonomously commission a network and manage the network topology in the wireless communication system of Figure 1, in accordance with the present invention;

Figure 4 shows a signal diagram of MPs autonomously commissioning a network and managing the network topology in accordance with the present invention;

Figure 5A is a flow diagram of a method of commissioning a mesh network, in accordance with the present invention;

Figure 5B is a flow diagram of a method of determining mastery of a region of the mesh network, in accordance with the present invention; and

Figure 6 shows a wireless communication system including a cluster and regions, in accordance with the present invention.

DETAILED DESCRIPTION OF THE PREFERRED EMBODIMENTS

Hereafter, the terminology "STA" includes but is not limited to a user equipment, a wireless transmit/receive unit (WTRU), a fixed or mobile subscriber unit, a pager, or any other type of device capable of operating in a wireless environment. When referred to hereafter, the terminology "AP" (or interchangeably "mesh point" or "MP"), includes but is not limited to a Node-B, a site controller, a base station or any other type of interfacing device in a wireless environment.

The features of the present invention may be incorporated into an integrated circuit (IC) or be configured in a circuit comprising a multitude of interconnecting components.

Figure 2 shows a wireless communication system 100 configured in accordance with the present invention. The wireless communication system 100 includes a plurality of MPs 110, capable of wireless communication with one another. Any number of STAs (not shown) may also be connected to the MPs 110 to communicate with one another via the wireless communication system 100 via the MPs 110.

Figure 3 shows a block diagram of two MPs (designated as MP 110' and MP 110"), configured to autonomously commission a network and manage the network topology in the wireless communication system, in accordance with the present invention. For purposes of example, the MP 110' and the MP 110" are substantially similar units.

In addition to the nominal components included in a typical MP, the MP 110' includes a processor 115 configured to autonomously commission a network and manage the network topology, a receiver 116 in communication with the processor 115, a transmitter in communication with the processor 115, a memory 119 in communication with the processor 115, and an antenna 118 in communication with both the receiver 116 and the transmitter 117 to facilitate the transmission and reception of wireless data to and from the MP 110'.

In addition to the nominal components included in a typical MP, the MP 110" includes a processor 125 configured to autonomously commission a network and manage the network topology, a receiver 126 in communication with the processor 125, a transmitter in communication with the processor 125, a memory 129 in communication with the processor 125, and an antenna 128 in communication with both the receiver 126 and the transmitter 127 to facilitate the transmission and reception of wireless data to and from the MP 110".

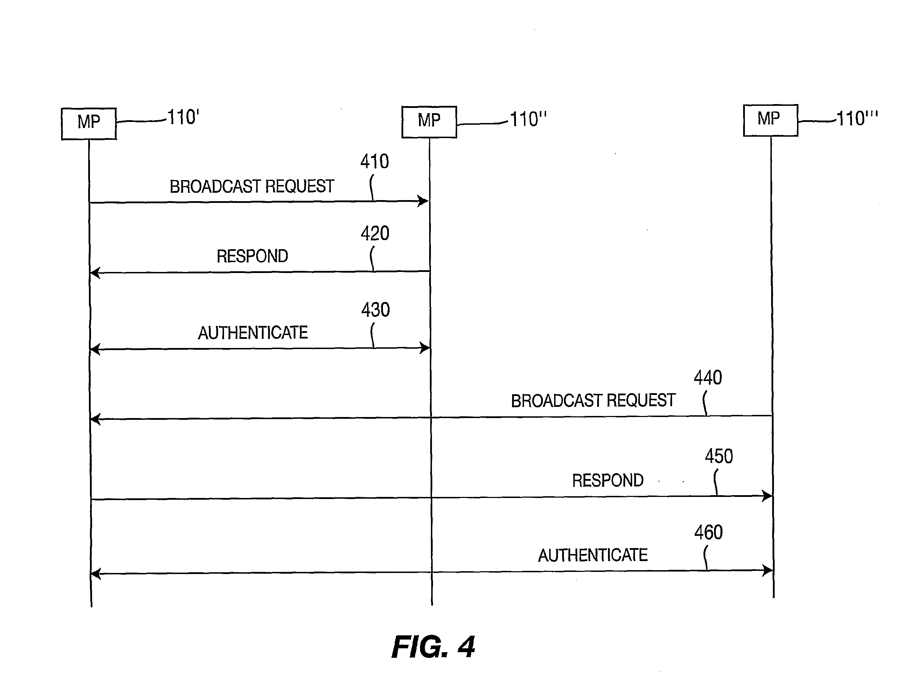

Figure 4 shows a signal diagram between the MP 110' and the MP 110" during the formation and management of a mesh network in accordance with the present invention. In a preferred embodiment of the present invention, the processor 115 of the MP 110' broadcasts a signal request (410) through the transmitter 117 and the antenna 118 to the MP 110" in an attempt to establish a wireless link between them. The receiver 126 of the MP 110" receives the signal from the MP 110' via the antenna 128 and forwards it to the processor 125. The processor 125 extracts data from the memory 129, which includes credential information relating to the MP 110".

The processor 125 of the MP 110" then transmits a response (420), including the credential data, to the MP 110' via the transmitter 127 and the antenna 128. The receiver 116 of the MP 110' receives the response via the antenna 118 and forwards it to the processor 115. The processor 115 extracts the credential information for the MP 110' from the memory 119 and compares it to the credential information received in the response from the MP 110". The processor 115 then determines whether the MP 110' or the MP 110" should be master and transmits an authentication signal (430) back to the MP 110" via the transmitter 117 and the antenna 118. The authentication signal includes the information relating to which MP 110 (110' or 110") is to be master in the network. The MP 110' and the MP 110" now constitute a mesh network. In particular, the two MPs (110' and 110") may now form a region in the developing mesh network, where a region is composed of a plurality of MPs 110 having one MP 110 designated as the master of the remaining MPs 110 in the region. Accordingly, the mesh network may include a plurality of regions.

In an alternative manner of determining which MP 110 should be the master of the region, the processor 115 of the MP 110' may extract credential information about the MP 110' before broadcasting the signal request (410) to establish a wireless link. Accordingly, when the processor 125 of the MP 110" receives the signal request from the MP 110', the processor 125 may compare the credentials received from the MP 110' to the credential information stored in the memory 129 of the MP 110". The MP 110" may then transmit the information back to the MP 110' in its response, including the authentication information and information relating to which MP 110 (MP 110' or MP 110") is to be master of the region. The determination of which MP is to be master of the region may be performed by the processor 115 of the MP 110' and signaled to the MP 110", or the determination may be made by the processor 125 of the MP 110" and signaled to the MP 110'.

Referring again to Figure 4, for purposes of example, MP 110' is designated master by virtue of possessing superior credentials. An additional MP 110'" (which is substantially similar in structure to MP 110' and MP 110") broadcasts a request (440) to MP 110' to associate with the mesh network created between MP 110' and MP 110". The master MP 110' receives the request and transmits a response (450) to the MP 110"' with the credential information relating to MP 110'. The MP 110"' receives the response from the MP 110' and compares the credentials of the MP 110' with the credentials of the MP l10"' to determine whether or not MP 110' should remain master of the mesh network or if mastery should reside in MP 110"'. The MP 110"' transmits an authentication signal (460), which includes the information relating to which MP 110 (110' or 110"') is to be master in the network. The MP 110', the MP 110", and the MP 110'" now constitute the mesh network.

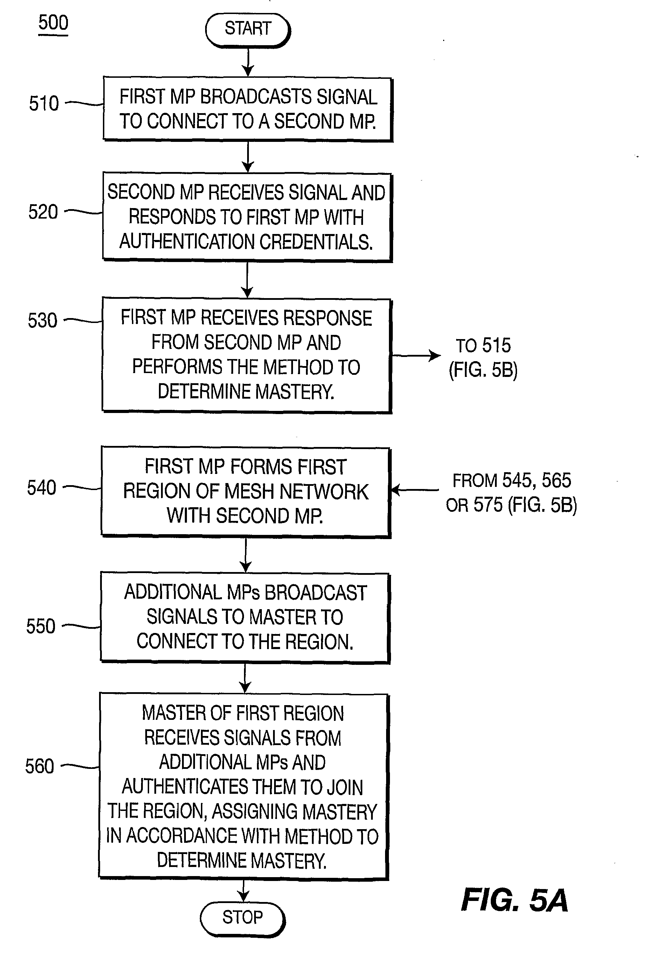

Figure 5A shows a method of commissioning a mesh network 500, in accordance with the present invention. In step 510, the first MP 110' broadcasts a signal to the second MP 110" to connect to the second MP 110". The second MP 110" receives the signal from the first MP 110' and transmits a response to the first MP 110', including the authentication and credential data of the second MP 110" (step 520). The first MP 110' receives the transmitted signal, along with the authentication and credential data, and performs a method of determining mastery (step 530).

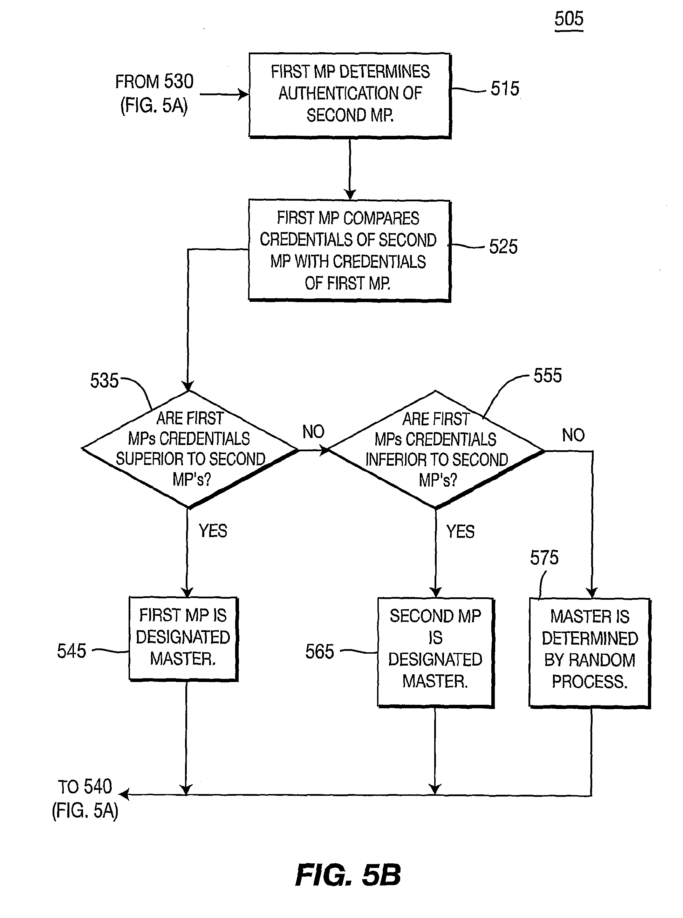

Figure 5B shows a method of determining mastery 505 in accordance with the present invention. In step 515, the first MP 110' authenticates the second MP 110". The first MP 110' may authenticate the second MP 110" by determining the basic configuration of authentication parameters such as key and security associations that define the second MP 110"s authenticity as a device of a particular operator or a common manufacturer.

Once the first MP 110' has authenticated the second MP 110", the first MP 110' compares the credentials of the second MP 110" to determine which MP (110' or 110") will be designated the master of the mesh network 100 (step 525). Table 1 below illustrates a typical credential level and associated information related to the credential level, such as "level designation," "capabilities," and "mesh element."

**Table 1**

| **Level** | **Level Designation** | **Capabilities** | **Mesh Element** |
|---|---|---|---|
| 1 | Basic | • Packet Forwarding | Mesh Point |
| | | • Authentication | |
| 2 | Intermediate | • Packet Forwarding | Mesh Point |
| | | • Routing Capabilities | |
| | | • Authentication (Client) | |
| 3 | Advanced | • Packet Forwarding | Mesh Point |
| | | • Routing Capabilities | Portal |
| | | • Authentication (Client/Server) | |
| | | • Portal Capabilities | |

Referring now to Table 1, examples of credential level and associated designations and functionalities are shown. For example, an MP 110 with a credential level of 1 may be designated as "basic" and only be capable of packet forwarding and authentication. An MP 110 with a credential level of 2 may be designated as "intermediate" and capable of packet forwarding, routing capabilities, and client authentication. A level 3 MP 110 may be designated as "advanced" and capable of packet forwarding, routing capabilities, client/server authentication, and portal capabilities, allowing it to be a mesh point portal element.

Accordingly, in step 535, if the credential level of the first MP 110' is superior to the credential level of the second MP 110", then the first MP 110' is designated as the master of a first region of the mesh network (step 545). The second MP 110" is designated as the first member of the first region in which the first MP 110' and the second MP 110" form the first region of the mesh network (step 540).

If the credential level of the first MP 110' is not superior to the second MP 110" (step 535), but the credential level of the second MP 110" is superior to the first MP 110' (step 555), then the second MP 110" is designated as the master of a first region of the mesh network (step 565). The first MP 110' is designated as the first member of the first region in which the first MP 110' and the second MP 110" form the first region of the mesh network (step 540).

If the credential level of the first MP 110' is not superior to the second MP 110" (step 535), and the credential level of the second MP 110" is not superior to the first MP 110' (step 555), then a random process is run on the processor 115 of the first MP 110' to determine which MP 110 will be the master of the first region (step 575). This ensures that mastership of the region will be determined in a secure manner.

Referring back to Figure 5A, additional MPs 110 broadcast a signal to the master of the mesh network region to join the region (step 550). The master MP 110 of the mesh network region receives the signals and the authentication and determination of mastery process between the mesh network region and the additional MPs is performed (step 560). Accordingly, any additional MP 110 that connects to the region with a credential level superior to the existing master MP of the region will be designated as the new master MP of the region. The process is repeated for any additional MPs 110 that transmit an attempt to connect to the region.

Alternatively, when two or more MPs 110 possess equal credentials, they may form master clusters of regions with a master MP responsible for its own region. In this manner, the burden of a growing network may be shared as MPs are dynamically connecting to, and disconnecting from, the mesh network.

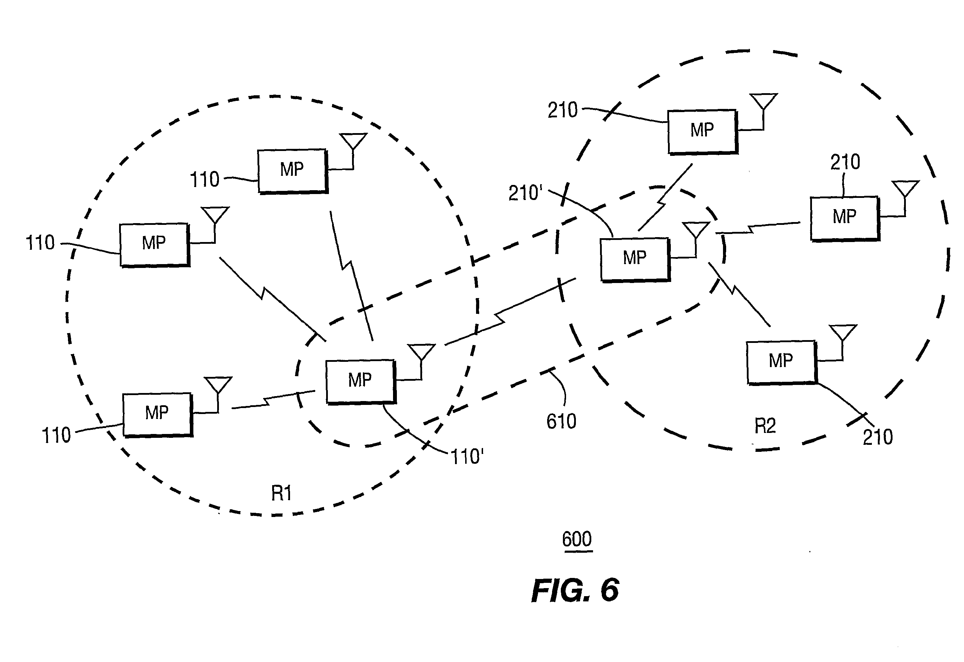

Figure 6 shows a wireless communication system 600, including a master cluster 610 formed between a master MP 110' of a first region R1 and a master MP 210' of a second region R2. The first region R1 includes the master MP 110', which controls all of the MPs 110 in its region R1. Similarly, the master MP 210' controls all MPs 210 in its region R2. Accordingly, each master MP 110' and 210' possess the highest security and integrity capabilities within the mesh network 600, and are capable of enabling authentication of MPs from regions that the master MP may not be master of, as long as the region's master MP is a member of the same cluster as the authenticating MP.

For example, again referring to Figure 6, any member MP 210 of region R2 is capable of communicating with any member MP 110 of region R1 since the master MPs (210' and 110') of regions R2 and R1, respectively, are members of the same cluster 610.

The cluster members may share information about the wireless communication system 600 such as security, routing, and topology information. Moreover, since the cluster members are superior to the region members, the cluster members are capable of providing increased availability and load distribution to the wireless communication system 600. The cluster members may also share information relating to neighboring maps, routing maps, and neighbor measurements, among other information. Table 2 illustrates additional functions the cluster member MPs 110' and 210' may provide.

**Table 2**

| Function | Input | Source | Output |
|---|---|---|---|
| neighborD iscovery | neighboringMap | AP | CandidateNeighb oringList |
| | neighboringMeasurements | Client SMP Function | |
| | neighboringSystemPreference | Configurable at the client | |
| | neighborAccessTechnology | AP (neighboringMap) | |
| | neighborMeshCapabilties | AP (neighboringMap) | |
| | routingMap | | |
| SMP | neighboringMap | AP | neighboringMeas urements |

The functions depicted in Table 2 can provide impact and interaction of topology discovery with other processes; required neighborhood information; and network impact estimates due to network addition/deletion of MPs. Network configuration based on characteristics of the mesh paths from the new MP towards the potential destination MPs, such as information derived from the neighbor discovery, allow the cluster member MPs to provide an optimal establishment of a mesh path. This data allows cluster member MPs to assign a member MP of one region in the cluster to be reassigned to another region within the cluster depending a variety of parameters. In particular, the cluster member MPs may desire to alter the existing topology to balance the load in the mesh network, to more effectively manage the resources existing in the mesh network, or in response to routing requirements among region MPs.

For example, in response to increased traffic within region R1 of the mesh network 600, the cluster member MP 110' may reassign a particular MP 110 to the cluster member 210' of region R2 in order to optimize routing. This reassignment may be triggered by either the MP 110 itself or by the cluster member MP 110'. For purposes of example, two regions (R1 and R2) are depicted composing regions within the cluster 610. However, any number of regions may be compose the cluster, including additional cluster members controlling additional regions. The cluster members MP 110' and MP 210' may then update their respective region member MPs with the new topology.

The present invention may be implemented in any type of wireless communication system, as desired. By way of example, the present invention may be implemented in any type of 802 type system, or any other type of wireless communication system. The present invention may also be implemented on an integrated circuit, such as an application specific integrated circuit (ASIC), multiple integrated circuits, logical programmable gate array (LPGA), multiple LPGAs, discrete components, or a combination of integrated circuit(s), LPGA(s), and discrete component(s).

Although the features and elements of the present invention are described in the preferred embodiments in particular combinations, each feature or element can be used alone without the other features and elements of the preferred embodiments or in various combinations with or without other features and elements of the present invention.

### EMBODIMENTS

1. A method for commissioning and managing communication between a plurality of mesh points (MPs).
2. The method of embodiment 1 wherein a first MP broadcasts a signal to a second MP to establish communication with the second MP.
3. A method as in any preceding embodiment wherein a second MP transmits a response signal to a first MP.
4. A method as in any preceding embodiment wherein a first MP authenticates a second MP and determines a master MP.
5. A method as in any preceding embodiment wherein a first MP establishes communication with a second MP.
6. A method as in any preceding embodiment wherein a response signal transmitted by a second MP includes authentication credentials relating to the second MP.
7. A method as in any preceding embodiment wherein authentication credentials include a plurality of credential levels.
8. A method as in any preceding embodiment wherein a credential level includes level 1, level 2, and level 3 credential levels.
9. The method of embodiment 8 wherein a level 1 credential level includes packet forwarding and authentication capabilities.
10. The method of embodiments 8-9 wherein a level 2 credential includes packet forwarding, routing capabilities, and client authentication capabilities.
11. The method of embodiments 8-10 wherein a level 3 credential includes packet forwarding, routing capabilities, client/server authentication, and portal capabilities.
12. A method as in any preceding embodiment wherein authentication credentials relating to a second MP are compared to authentication credentials relating to a first MP.
13. A method as in any preceding embodiment wherein authentication credentials relating to a first MP are superior to authentication credentials relating to a second MP and the first MP is designated as a master MP.
14. The method of embodiments 1-12 wherein authentication credentials relating to a second MP are superior to authentication credentials relating to a first MP and the second MP is designated as a master MP.
15. The method of embodiments 1-12 wherein authentication credentials relating to a second MP are equal to authentication credentials relating to a first MP and a random process is performed to determine the master MP.
16. A method as in any preceding embodiment wherein a first MP and a second MP form a first region of a mesh network.
17. The method of embodiment 16 wherein an additional MP broadcasts a signal to a master MP of a first region to connect to the first region.
18. The method of embodiment 17 wherein an additional MP includes authentication credentials superior to a master MP of a region and the additional MP is designated the new master of a first region.
19. The method of embodiment 17 wherein an additional MP includes authentication credentials equal to a master MP and a random process is performed to determine a master MP of a first region.
20. The method of embodiment 17 wherein an additional MP includes authentication credentials equal to a master MP and the additional MP is designated a master of a second region.
21. A method as in any preceding embodiment wherein a first region and a second region form a cluster.
22. The method of embodiment 21 wherein a master MP of a first region and a master MP of a second region are designated cluster members.
23. A method as in any preceding embodiment wherein an MP in a first region communicates with an MP in a second region by transmitting the communication to a master MP in the first region, the master MP of the first region transmitting the communication to a master MP of the second region, and the master MP of the second region transmits the communication to the MP in the second region.
24. A wireless communication system comprising a cluster.
25. The wireless communication system of embodiment 24 wherein a cluster includes a plurality of regions.
26. The wireless communication system of embodiments 24-25 further comprising a plurality of cluster members.
27. The wireless communication system of embodiment 26 wherein a cluster member is a master of a region and in wireless communication with each other cluster member.
28. The wireless communication system of embodiments 24-27 further comprising a plurality of region members in wireless communication with the cluster member associated with their region.
29. The wireless communication system of embodiments 26-28 wherein cluster members are mesh points (MPs).
30. The wireless communication system of embodiments 26-29 wherein cluster members are configured to discover neighbor MPs.
31. The wireless communication system of embodiments 26-30 wherein cluster members discover neighbor MPs by broadcasting a signal to establish communication with neighbor MPs.
32. The wireless communication system of embodiments 26-31 wherein cluster members receive response signals from neighbor MPs including authentication credentials associated with the neighbor MPs.
33. The wireless communication system of embodiments 24-32 wherein a member of a first region communicates to a member of a second region by transmitting the communication to the cluster members of the first and second regions.
34. A mesh point (MP).
35. The MP of embodiment 34 further comprising a receiver.
36. The MP of embodiments 34-35 further comprising a transmitter.
37. The MP of embodiments 34-36 further comprising a processor in communication with a receiver and a transmitter.
38. The MP of embodiments 34-37 wherein a processor is configured to broadcast a signal through a transmitter to discover additional MPs.
39. The MP of embodiments 34-38 wherein a processor receives response signals from additional MPs through a receiver.
40. The MP of embodiments 34-39 wherein a processor compares authentication and credential data relating to an additional MP to authentication and credential data relating to the MP to determine an MP master.
41. The MP of embodiments 34-40 further comprising a memory in communication with a processor.
42. The MP of embodiments 34-41 wherein a memory includes credential data relating to the MP.
43. The MP of embodiments 34-42 further comprising an antenna in communication with a transmitter and a receiver.
44. A base station.
45. The base station of embodiment 44 further comprising a receiver.
46. The base station of embodiments 44-45 further comprising a transmitter.
47. The base station of embodiments 44-46 further comprising a processor in communication with a receiver and a transmitter.
48. The base station of embodiments 44-47 wherein a processor is configured to broadcast a signal through a transmitter to discover additional base stations.
49. The base station of embodiments 44-48 wherein a processor receives response signals from additional base stations through a receiver.
50. The base station of embodiments 44-49 wherein a processor compares authentication and credential data relating to an additional base station to authentication and credential data relating to the base station to determine a base station master.
51. The base station of embodiments 44-50 further comprising a memory in communication with a processor.
52. The base station of embodiments 44-51 wherein a memory includes credential data relating to the MP.
53. The base station of embodiments 44-52 further comprising an antenna in communication with a transmitter and a receiver.
54. A mesh point (MP) comprising an integrated circuit (IC).
55. The IC of embodiment 54 further comprising a receiver.
56. The IC of embodiments 54-55 further comprising a transmitter.
57. The IC of embodiments 54-56 further comprising a processor in communication with a receiver and a transmitter.
58. The IC of embodiments 54-57 wherein a processor is configured to broadcast a signal through a transmitter to discover additional MPs.
59. The IC of embodiments 54-58 wherein a processor receives response signals from additional MPs through a receiver.
60. The IC of embodiments 54-59 wherein a processor compares authentication and credential data relating to an additional MP to authentication and credential data relating to the MP to determine an MP master.
61. The IC of embodiments 54-60 further comprising a memory in communication with a processor.
62. The IC of embodiments 54-61 wherein a memory includes credential data relating to the MP.
63. The IC of embodiments 54-62 further comprising an antenna in communication with a transmitter and a receiver.

## Claims

1. An integrated circuit (IC) implemented in a mesh point (MP), comprising:
a receiver;
a transmitter; and
a processor in communication with both the receiver and the transmitter, wherein the processor is configured to broadcast a signal through the transmitter to discover additional MPs, receive response signals from the additional MPs through the receiver, wherein the response signals include a level 1, level 2, and level 3 credential level relating to the capabilities of the additional MPs, and compare authentication and credential data relating to the additional MPs to authentication and credential data relating to the MP to determine whether the MP or one of the additional MPs is to be an MP master.

2. The IC of claim 1, further comprising a memory in communication with the processor.

3. The IC of claim 2 wherein the memory includes the credential data relating to the MP.

4. The IC of claim 1, further comprising an antenna in communication with the transmitter and the receiver.

5. A mesh point comprising the IC according to any one of the claims 1-4.

6. The mesh point according to claim 5, wherein the mesh point is a base station and wherein the additional MPs are base stations.
